# EUROPEAN PATENT APPLICATION

(11) **EP 0 901 064 A2**
(43) Date of publication of application: **10.03.1999**
(21) Application number: 98307067.3
(22) Date of filing: 03.09.1998
(51) Int. Cl.: G06F 3/00, G06K 11/00

(54) **A ponting device**

(30) Priority: 04.09.1997 GB 9718820
(71) Applicant: Penny & Giles Computer Products Ltd., Christchurch, Dorset BH23 3TE (GB)
(72) Inventor: Sawyer, Anthony Mark, Broadstone, Dorset BH18 9AL (GB); Johns, David James, Ringwood, Hampshire BH24 3AD (GB)
(74) Representative: Purvis, William Michael Cameron

(57) **Abstract**

A pointing device 1 comprising: clamp means 3 capable of clamping the device to the head of a user; means 5 for sensing the direction of movement of the head of the user and for outputting direction signals indicative thereof; means 7 for mounting the sensing means 5 on the clamp means 3; means 50 for setting a deadzone in which movement of the head of the user does not result in the output of direction signals.

## Description

This invention relates to a pointing device.

Over the last few decades, the use of computers has become widespread in business, education and at home. The first of these computers were operated by machine code inputted by a user via a keyboard. Later computers employed disk operating systems such as MSDOS^{TM} which allowed the user to control a computer with a series of commands rather than complex machine code. Modern computers are controllable by way of graphical user interfaces (GUIs) which allow a user to control the computer simply by manipulating a cursor to select commands from lists of alternatives displayed in pull-down menus on the screen of the computer.

The cursors employed in GUIs are designed to be controlled by a pointing device rather than a keyboard, although in practice control is often duplicated on the keyboard so that the computer can still be controlled if the pointing device should fail. Various pointing devices have been developed for control of a cursor in a GUI environment. The most popular of these is the so-called mouse, which comprises a rolling ball located in a housing, the movement of the housing and consequent rolling of the ball being sensed by two sensors provided in the housing on the north-south and east-west axes respectively. Various other devices have been proposed, such as the trackerball (a stationary housing having a rotatable ball mounted in an upper surface thereof), the joystick and the light pen, amongst others.

All of these previously proposed pointing devices may easily be manipulated by an able-bodied user to control a cursor in a GUI, and thus to control a computer. These modern computers can be controlled to perform a large number of functions such as speech replication and global communication through the internet and through modem to modem connections.

Given the great utility of modern computers, it would be highly desirable if they could be effectively utilised by mentally and physically disabled persons to perform a variety of different functions, such as communications and entertainment. Unfortunately, this laudable aim is currently not achievable as presently available pointing devices cannot easily be manipulated by many mentally and physically disabled persons.

Some mental and physical disabilities are such that the disabled person is incapable of illustrating the fine motor control necessary to depress keys of a keyboard or to control a conventional pointing device, as a consequence of which these disabled persons are unable to effectively operate modern GUI-driven computers.

Even less severely disabled wheelchair-bound persons can experience difficulties using presently available pointing devices as these devices often require the user to be locatable close to the table top on which the computer is to be operated (for use of a mouse or trackerball), or to be locatable close to the screen of the computer (for use of a light pen). The wheelchair-bound user is often prevented from coming sufficiently close to the computer to enable them to use the pointing device without having to stretch. Prolonged use of the computer can thus be uncomfortable for the wheelchair-bound disabled person as it can involve a lot of stretching.

One previously proposed device which, at first sight, would appear to alleviate the above described problems is shown and described in International Patent Application Number WO 90/05356. This document describes a computer input device having an orientation device that is designed to be worn on the head of a user. The orientation device comprises a headband upon which a hollow sphere is mounted. The sphere is half filled with a liquid and at least one light source/detector pair is provided in the wall of the sphere. In use, light from the source is refracted by the liquid/air interface and the intensity of refracted light is sensed by the detector. As the headband is tilted, so the refraction angle changes and the light intensity sensed by the detector changes. The changing light intensities are passed to a controller which determines the direction and magnitude of movement therefrom. The sensed movement can be represented by movement of a cursor on the screen of a computer.

This device is designed to be worn by a disabled person to alleviate problems associated with conventional pointing devices. Whilst this arrangement does alleviate some of the disadvantages of previously proposed pointing devices such as the mouse, it itself suffers from a number of major drawbacks.

Firstly, the sphere of the device is mounted to the headband by way of a screw/bushing arrangement which is finger adjustable so that the angle of the sphere may be adjusted with respect to the headband. This arrangement, whilst adequately providing for east-west adjustment in the horizontal plane makes no provision for north-south adjustment in the horizontal plane, which would be required if the user is unable comfortably to keep their head in an upright vertical position - as is the case with a large number of disabled persons.

Secondly, as the device senses both magnitude and direction of movement, it is often very difficult for the user to control a cursor accurately as a sudden movement is interpreted as a desire to move the cursor a large distance on the screen. Thus, involuntary spasms of the wearer can send the cursor racing towards the edge of the screen.

Thirdly, those persons with a tremor of the head find the device even more difficult to use as reciprocal slight movements of the head cause the cursor to dither back and forth on the screen. This dithering makes it extremely difficult for the user to select commands from a pull-down menu, for example.

Finally, the sensing of differing light intensity and thus analogue voltage levels necessitates the provision of complicated and expensive electronics that make the device excessively expensive to manufacture.

It is an object of the present invention to provide embodiments which alleviate one or more of these problems.

In accordance with the present invention, there is provided a pointing device comprising clamp means capable of clamping the device to the head of a user, means for sensing the direction of movement of the head of the user and for outputting direction signals indicative thereof, means for mounting the sensing means to the clamp means, means for setting a deadzone in which movement of the head of the user does not result in the output of direction signals.

The present invention alleviates the above mentioned problems by providing a pointing device which is capable of being worn on the head of a user and which incorporates means for setting a deadzone in which slight movement of the head of the user does not result in the generation of direction signals, thereby allowing the pointing device to be tailored to the particular ability of the wearer.

Preferably, the mounting means comprises a universal mount. This enables the east-west and north south orientation with respect to the horizontal plane to be adjusted.

The mounting means may comprise a resilient "U" shaped member having a mounting plate and a pair of arms extending therefrom, the arms each having a circular aperture which together define a channel for receiving the sensing means. Preferably, a plurality of grommets are placed about the periphery of each of the circular apertures, the grommets contacting the sensing means to hold the sensing means in a selected orientation.

Preferably, the clamp means comprises a band of elastic fabric. Alternatively, the clamp means may comprise a resilient "C" shaped member of plastics material.

Preferably, the device comprises means for outputting direction signals which may comprise a wireless link having a transmitter and a receiver, the receiver being connectable to a computer. The wireless link may be a radio frequency (RF) link or an infra-red link.

The sensing means may comprise an electrolytic sensor. The electrolytic sensor may comprise a first electrode pair and a second electrode pair, current being passable in use from the electrode pairs to a central electrode via an electrolyte provided about said electrodes. The first and second electrode pairs may each form a wheatstone bridge operable to sense a voltage difference resulting from variations in the amount of electrolyte between respective electrodes of said electrode pairs and said central electrode.

Preferably, the sensing means comprises at least one compartment and at least one ball provided in the compartment, the ball being movable within the compartment to make or break a light beam between at least one light emitter and at least one light detector provided in opposite walls of the at least one compartment thereby to generate said direction signals.

In one example, the sensing means may comprise four compartments placed at 90° to one another in the horizontal plane, each compartment having a ball provided therein and a light emitter and a light detector provided in opposite walls of the compartment.

In another example, the sensing means may comprise a cross shaped compartment and a ball provided therein, the compartment having a central portion and four lobes joined thereto at 90° to one another, each lobe having a light emitter and a light detector provided in opposite walls thereof.

In another example, the sensing means may comprise a first compartment and a second compartment each having a ball provided therein, the first and second compartments being provided at 90° to one another and comprising a central portion and a pair of linearly aligned lobes each connected to opposite walls of the central portion, each lobe having a light emitter and a light detector provided in opposite walls thereof.

Preferably, the means for setting a deadzone comprises means for varying the inclination angle of at least a portion of the at least one compartment. The means for varying the inclination angle may comprise a screw adjuster.

Preferably, means are provided for converting direction signals to cursor control signals for controlling movement of a cursor on a screen of the computer. The converting means may comprise a controller connectable to the sensing means for converting direction signals inputted thereto into cursor control signals, and for outputting cursor control signals to the outputting means.

Preferably, the device comprises threshold means connectable to said sensing means for outputting direction signals only when an input has been provided thereto for at least a predetermined quantity of time.

In accordance with a further aspect of the invention, there is provided a computer system comprising a computer, display means and a device as described herein for controlling movement of a cursor displayed on said display means.

Embodiments of the invention will now be described, by way of example only, with reference to the accompanying drawings, in which:
Figure 1 illustrates a schematic representation of an embodiment of a device according to the invention;
Figure 2 illustrates a mounting shown in Figure 1;
Figure 3 schematically illustrates a computer system incorporating the device of Figure 1;
Figure 4a illustrates a plan view of one example of a direction sensing means;
Figure 4b illustrates an elevational view of the direction sensing means of Figure 4a;
Figure 5 illustrates a control circuit for use with the sensing means of Figure 4;
Figure 6 illustrates a plan view of alternative direction sensing means to that of Figures 4a and 4b;
Figure 7a illustrates a plan view of yet another direction sensing means;
Figure 7b illustrates an elevational view of the sensing means of Figure 7a;
Figure 8 is a schematic cross-sectional view of a second embodiment of tilt sensor;
Figure 9 is a schematic plan view of the sensor of Figure 8;
Figures 10a and 10b are equivalent circuits for the sensor of Figures 8 and 9;
Figure 11 is a plot of tilt angle against voltage;
Figure 12 is a detail of Figure 11;
Figure 13 is an illustrative plot of direction vectors;
Figure 14 is a plan view of a separate transmitting unit; and
Figure 15 is a schematic view of a control mechanism.

Embodiments of the invention will now be described with particular reference to a computer system, and to the use of the device as a pointing device for a computer. However, it should be noted that the device may be employed in a variety of different systems for a variety of different purposes. Accordingly, the device should not be considered as being limited to a computer system.

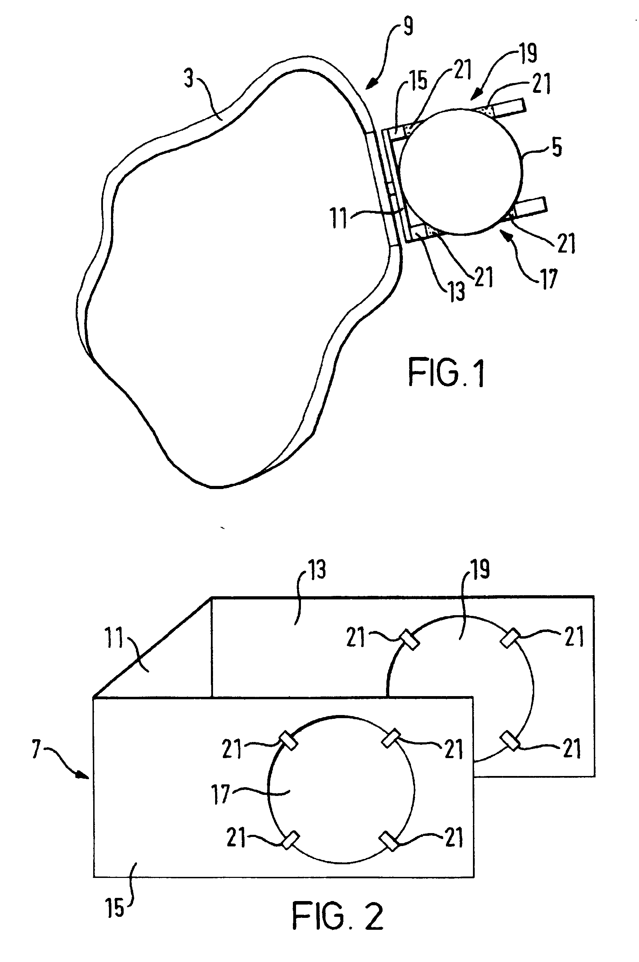

With reference to Figures 1 and 2, a pointing device 1 comprises a clamp means 3 capable of being worn on the head (not shown) of a user, a direction sensor 5 and mounting means 7 for mounting the sensor 5 on the clamp means 1.

The mounting means 7 comprises a resilient "U" shaped mounting bracket 9 having a mounting plate 11 and a pair of arms 13, 15 extending therefrom. The sensor 5 is a spherical sensor 5 mounted between the arms 13 & 15 of the bracket 9. The arms are each provided with a circular aperture 17, 19 through which portions of the sensor protrude when the sensor is mounted in the bracket. A plurality of rubber grommets 21 are clipped to the edge of each of the circular apertures 15, 17 so that the sensor 5 only contacts the grommets and does not contact the arms. In this way, the spherical sensor 5 may be rotated to compensate for any tilt of the head of the wearer, whereupon the grommets will hold the sensor in the selected position.

In this preferred arrangement, the mounting means provides a universal mount for the direction sensor. It should be noted however that alternative universal mounts may be provided. It should also be noted that a non-universal mount allowing alignment of the direction sensor along one horizontal axis only may alternatively be provided.

The clamp means 3 may comprise a resilient "C" shaped band of a plastics material, or more preferably it may comprise an elastic fabric strip the length of which is freely adjustable to provide a comfortable fit to the head of a user. The clamp means may comprise a band capable of being worn in a vertical configuration akin to that of a pair of stereo headphones, or more preferably, the clamp means may comprise a band worn horizontally to abut the ears of the user. The clamp means may alternatively comprise a helmet or any other means for clamping the device to the head of a wearer. The mounting plate 11 may be adhered to the clamp means, formed integrally therewith, or may include means for attaching the mounting plate thereto such as a set of slots, one half of a mechanical hook and loop mechanism (such as velcro^{TM}) or a snap-fittable mechanical popper.

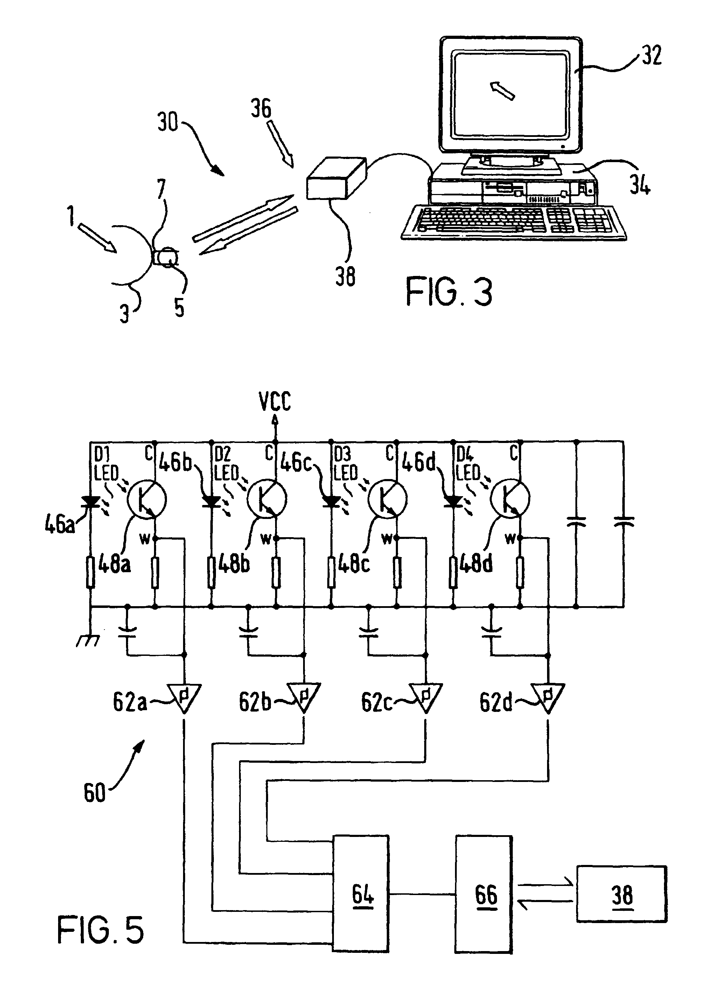

Figure 3 schematically illustrates a computer system 30 incorporating the device shown in Figure 1. With reference to Figure 3, the system 30 comprises the pointing device 1 of Figure 1, a monitor 32, a computer 34 and means 36 for connecting the pointing device 1 to the computer 34.

The connecting means 36 may be a wire or more preferably, as shown, the connecting means includes a wireless link between the pointing device 1 and the computer 34. The wireless link comprises a transmitter (not shown) which may be housed in the pointing device 5 (or in a separate unit connected by wire to the pointing device 5), and a receiver 38 which is connected to the computer. The wireless link may be an infrared link or an RF link, for example.

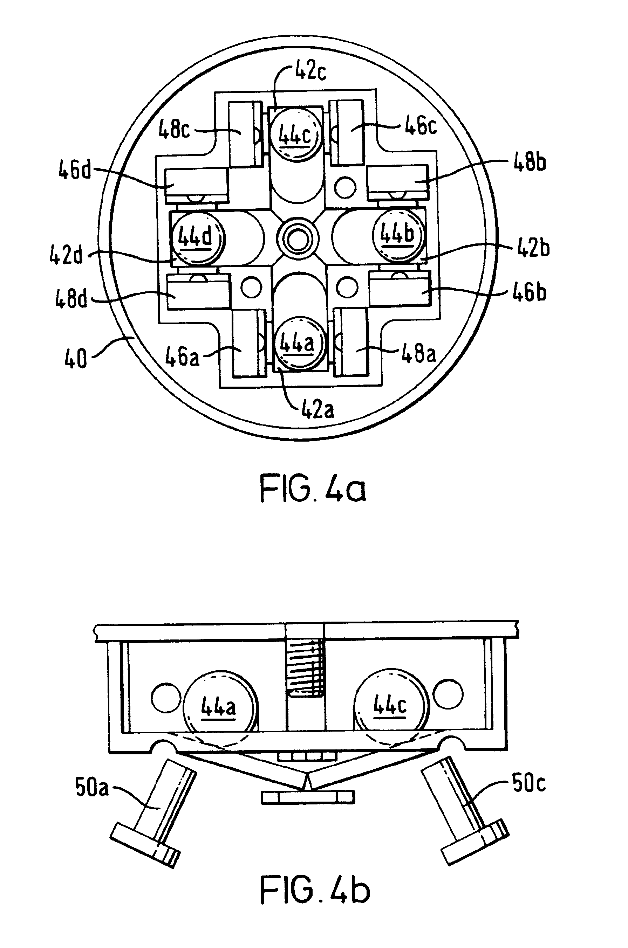

Figure 4a illustrates a plan view of one example of a direction sensor as shown in Figure 1. With reference to figure 4a, the direction sensor 5 comprises a spherical shell 40 (half of which is shown), four compartments 42a-42d positioned at 90° to each other in the horizontal plane (the plane of the paper) and four balls 44a-44d, one ball received in each compartment 42. For ease of reference the compartments will be referred to herein as an east-west pair and a north-south pair, and it should be understood that these terms do not imply any particular orientation other than that they are at 90° to one another. An optical emitter 46a-46d is located in one sidewall of an outer end of each compartment 42 and an optical detector 48a-48d is located in the other sidewall directly opposite the optical emitter 46a-46d.

As shown in Figure 4b, each compartment is hinged at an outer end and provided with a screw adjuster 50a-50d (only two of which are shown). Each screw adjuster 50 can be adjusted to bear upon the respective compartment thereby to vary the inclination angle of that compartment. In this way, it is possible to adjust the device to take account of the specific disability of a particular wearer. Furthermore, it is possible to adjust the inclination angle of each of the compartments independently of the other compartments.

Thus, if the wearer is only slightly disabled, then the screws can be adjusted such that the compartments are only slightly inclined. In this way, the force required to move the balls and trip each of the emitter/detector pairs will be reduced. In other words, the effective deadzone of head movement in which no direction signals are produced will be reduced.

If, on the other hand, the user has a disability that causes a left hand head tilt (a tilt to the east using the above mentioned nomenclature), then the left (east) screw adjuster can be adjusted to increase the inclination angle of the left hand (east) compartment, and the right (west) screw adjuster can be adjusted to reduce the inclination angle of the right hand (west) compartment. In this way, the force required to trip the left (east) emitter/detector pair will be larger than the force required to trip the right (west) emitter/detector pair, and the left hand head tilt of the disabled user will be compensated for. In other words, the effective deadzone of head movement in which no direction signals are produced will be increased.

In either example, the extent of the deadzone in which none of the emitter/detector pairs are tripped, and thus no direction signals are outputted, can be adjusted. The deadzone may be understood to be an adjustable threshold representative of a degree of head movement which must be exceeded before direction signals are generated.

As an alternative, a single screw adjuster could be provided and each of the compartments could bear upon the screw such that the inclination angle of all of the compartments could be adjusted at the same time. In such an arrangement, it would not be possible to adjust the inclination of a given compartment in isolation from the other compartments, but it would still be possible to vary the inclination angle for persons with differing degrees of disability.

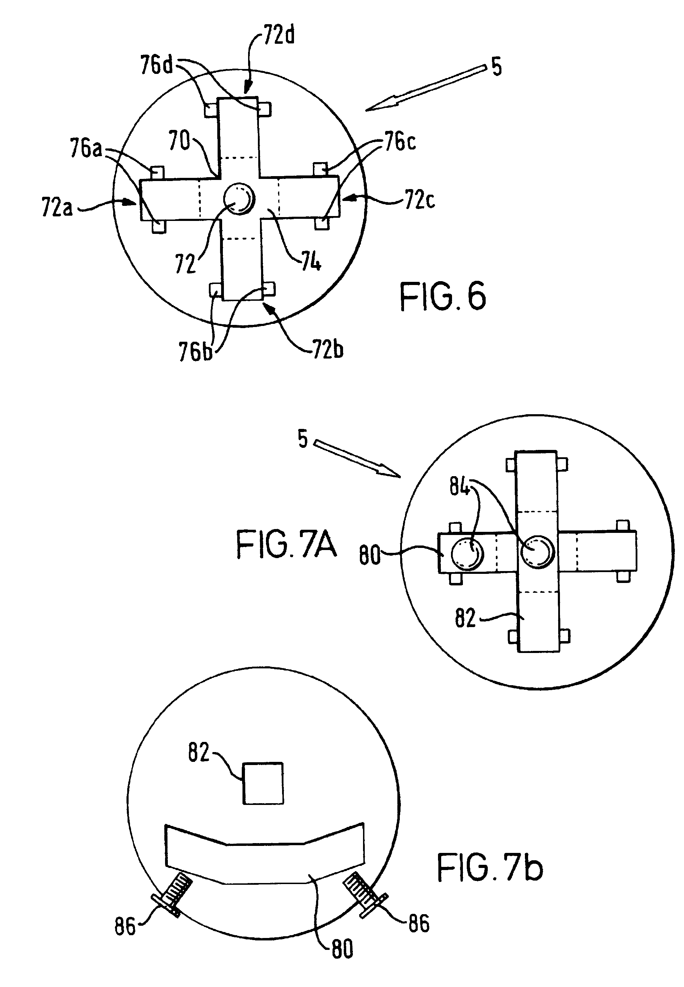

Figure 5 illustrates a control circuit 60 for use with the sensor of Figure 4. The control circuit is preferably housed in the shell 40, although other arrangements are conceivable. As shown, the emitters 46a-46d each comprise a light emitting diode (LED) and the detectors 48a-48d each comprise a photoelectric cell. Each of the emitters and detectors are connected to a suitable, preferably low power, power source such as one or more batteries. The use of a low power, power source allows the device to be used without having to connect it to the mains (or other power source) with a flex or other like connector that could impede the wearer of the device.

An output terminal of each of the detectors is connected to a respective schmidt trigger 62a-62d which conditions the signal from that detector by, for example, turning it from an analogue signal to a digital signal. The output of each of the triggers 62a-62d is connected to inputs of a controller 64 which is in turn connected, in the preferred embodiment, to a transmitter 66 of a conventional wireless communication device which communicates with the receiver 38 of Figure 3 to pass signals to the computer. The control circuit may be provided on a printed circuit board (PCB) together with any other components, such as control circuitry for external switches such as tongue, nose or eye switches. The controller 64 may include threshold means, such as a suitable piece of software, for reducing dithering of a cursor controlled by the pointing device by only outputting direction signals when an input has been provided to the threshold means for at least a predetermined quantity of time. Alternative hardware thresholding devices may alternatively or additionally be provided.

From the signals inputted thereto, the controller 64 can determine the direction of head movement and can generate suitable signals to control a cursor on the screen of the computer. The computer controls the cursor to move in the direction indicated by the outputted direction signals. The speed of cursor movement may be controlled with suitable software. When a respective ball breaks the light beam between one of the emitter/detector pairs (due to the head being tilted and the ball rolling in front of the emitter), an output signal is generated by the photoelectric cell and inputted to the respective trigger which generates an output signal, and the controller determines that a movement has been made in the direction indicated by the tripped emitter/detector pair. In this embodiment, diagonal movements may also be determined if an output signal is generated by more than one of the triggers.

Figure 6 illustrates a plan view of alternative direction sensor to that of Figures 4a and 4b. In this example, the sensor 5 includes a cross shaped compartment 70 and a single ball 72 which is free to move throughout the compartment. The lobes 72a-72d of the compartment 70 are arranged at 90° to one another and are hingedly connected to a central portion 74. Emitter/detector pairs 76a-76d are provided in respective end portions of the lobes, and screw adjusters are provided to enable the inclination angle of the lobes to be adjusted as before. Once again, a single screw adjuster could be provided, with each of the lobes bearing upon the screw adjuster so that the inclination angle of all of the lobes may be varied at the same time.

The sensor operates in the same manner as the sensor of Figures 4a and 4b except for the fact that diagonal movement cannot be sensed by this arrangement. Whilst this may seem to be a disadvantage, it can in fact provide advantages if the user has very poor motor control and is incapable of making discrete north-south and east-west movements. In this example, the user can make east-west movements (or north-south movements) that involve a relatively large north or south component (or east or west component) without accidentally triggering a diagonal movement.

Figure 7a illustrates a plan view of yet another direction sensor. In this example, the sensor 5 includes a pair of compartments 80, 82 provided respectively one above the other and along east-west and north-south axes. A ball 84 is provided in each of the compartments. An emitter/detector pair is provided in each end portion of the two compartments.

As shown in Figure 7b, the end portions of the two compartments are hingedly attached to a central portion and screw adjusters 86 are provided to vary the inclination angle thereof. This example also operates in the same manner as the arrangement of Figures 4a and 4b and also enables diagonal movements to be sensed. Once again, the end portions of each compartment may bear upon a common screw adjuster (one per compartment) so that the inclination angle of each pair of end portions may be varied simply by adjusting a single screw.

Control circuits similar to that of Figure 5 may be constructed to convert direction signals into cursor control signals for transmittal to the computer.

From the above, it can be seen that any tilt of a wearer's head may be compensated for firstly by adjusting the orientation of the sensor in the universal mount, and then secondly by setting a suitable deadzone appropriate for the particular disability of that wearer. It may also be possible to compensate for the wearer's disability purely by rotating the sensor in the universal mount, or purely by adjusting the deadzone in the man described above.

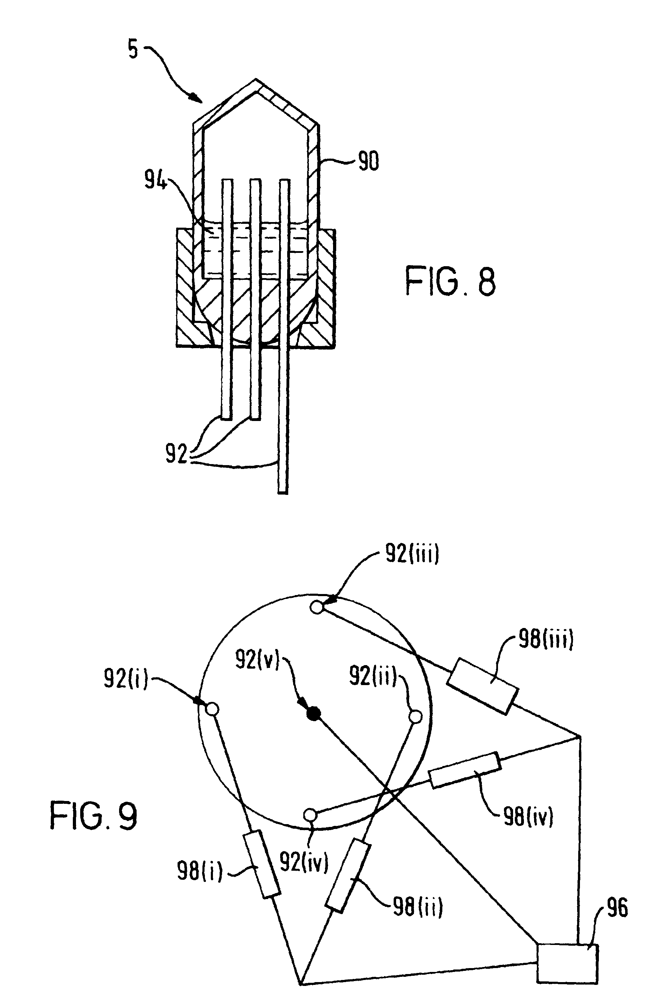

A second embodiment of tilt sensor will now be described with reference to Figures 8 to 15 of the accompanying drawings.

In this embodiment (see Figure 8), the sensor 5 is a so-called electrolytic tilt sensor that may advantageously be mounted on a printed circuit board (PCB) together with appropriate sensing electronics and housed in the shell 40 that is attached to the clamp means 3. Advantageously, in this embodiment the sensor may be mounted on the clamp means 3 without a universal mount, i.e. so that the position of the sensor cannot be adjusted with respect to the clamp means 3.

The sensor 5 comprises a housing 90 within which a plurality of electrodes 92 are provided. The housing 90 is partly filled with an electrolyte 94 that is free to circulate about the electrodes 92 as the sensor 5 is tilted.

Figure 9 shows a more detailed plan cross-sectional view of the sensor 5 shown in Figure 8. As shown, the sensor comprises a first pair of electrodes 92(i) and 92(ii), a second pair of electrodes 92(iii) and 92(iv), and a central electrode 92(v).

The first pair of electrodes will be referred to hereinafter as an "east-west" pair, and the second pair of electrodes will be referred to hereinafter as a "north-south" pair. However, it should be noted that this terminology does not imply any particular orientation other than that the two pairs of electrodes are at 90° to one another.

As shown, the east-west 92(i), 92(ii) and north-south 92(iii), 92(iv) pairs of electrodes are each connected to a power supply 96 that is connected to the central electrode 92(v). The electrolyte 94 serves to complete the circuits between the east-west pair 92(i), 92(ii) and the central electrode 92(v), and the north-south pair 92(iii), 92(iv) and the central electrode 92(v). Four resistors 98(i) to 98(iv) are provided, each of said resistors being connected in series with a respective one of said electrodes 92(i) to 92(iv). Resistors 98(i) and 98(ii) are of a substantially identical resistance, and resistors 98(iii) and 98(iv) are also of a substantially identical resistance that is preferably but not necessarily the same as the resistance of resistors 98(i) and 98(ii).

The east-west pair 92(i), 92(ii), the central electrode 92(v) and the first 98(i) and second 98(ii) resistors form a first tilt sensor 93. The north-south pair 92(iii), 92(iv), the central electrode 92(v) and the third 98(iii) and fourth 98(iv) resistors form a second tilt sensor 95.

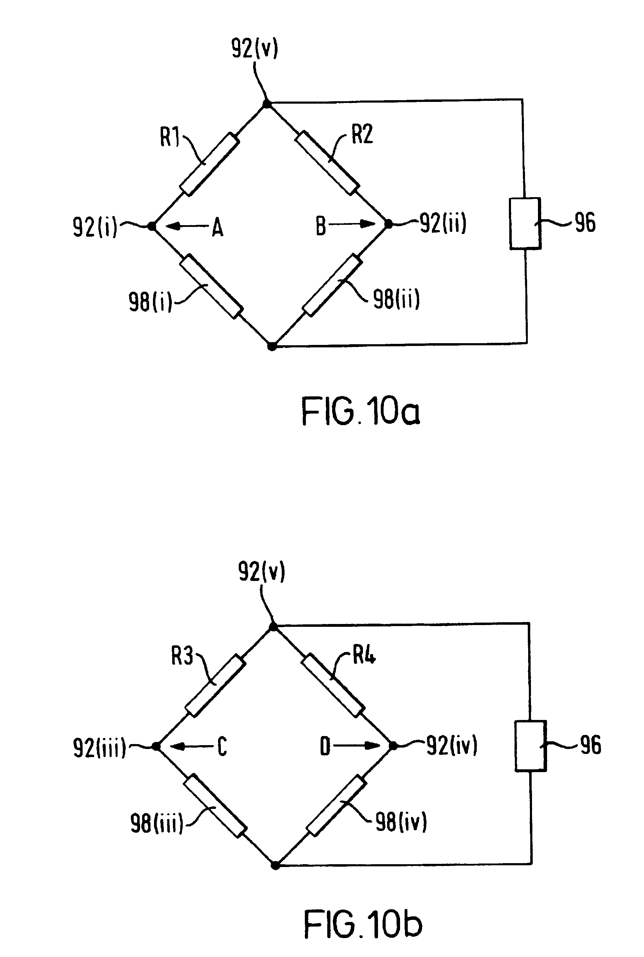

Figures 10a and 10b show equivalent electric circuits for the east-west and north-south pairs. As shown in figure 10a, the first electrode 92(i) is connected to the supply 96 via a first resistor 98(i), and the second electrode 92(ii) is connected to the supply 96 via a second resistor 98(ii). The electrolyte 94 provided between the first 92(i) and second 92(ii) electrodes and the central electrode 92(v) is electrically equivalent to a further pair of resistors R1 and R2 each having a resistance that depends upon the quantity of electrolyte between the first and central electrodes and between the second and central electrodes, respectively. The first, second and central electrodes and the resistors 98(i), 98(ii), R1 and R2 form a Wheatstone bridge that will provide a potential difference of zero volts between points A and B when the resistances 98(i), 98(ii), R1 and R2 are balanced.

If the resistance R1 is larger than R2 (i.e. if the quantity of electrolyte between the second electrode 92(ii) and the central electrode 92(v) is larger than the quantity of electrolyte between the first electrode 92(i) and the central electrode 92(v)) then a first potential difference will be detectable between points A and B.

If the resistance R2 is larger than R1 (i.e. if the quantity of electrolyte between the first electrode 92(i) and the central electrode 92(v) is larger than the quantity of electrolyte between the second electrode 92(ii) and the central electrode 92(v)) then a second potential difference will be detectable between points A and B. The magnitude of the first and second potential differences is directly related to the electrolyte imbalance between respective electrodes and the central electrode, and the direction of the potential difference (i.e. whether positive or negative) dictates whether there is an imbalance towards the first electrode or whether there is an imbalance towards the second electrode.

As shown in Figure 10b, the third electrode 92(iii) is connected to the supply 96 via a third resistor 98(iii), and the fourth electrode 92(iv) is connected to the supply 96 via a fourth resistor 98(iv). The electrolyte 94 provided between the third 92(iii) and fourth 92(iv) electrodes and the central electrode 92(v) is electrically equivalent to a further pair of resistors R3 and R4 each having a resistance that depends upon the quantity of electrolyte between the third and central electrodes and between the fourth and central electrodes, respectively. The third, fourth and central electrodes and the resistors 98(iii), 98(iv), R3 and R4 form a Wheatstone bridge that will provide a potential difference of zero volts between points C and D when the resistances 98(iii), 98(iv), R3 and R4 are balanced.

If the resistance R3 is larger than R4 (i.e. if the quantity of electrolyte between the fourth electrode 92(iv) and the central electrode 92(v) is larger than the quantity of electrolyte between the third electrode 92(iii) and the central electrode 92(v)) then a third potential difference will be detectable between points C and D.

If the resistance R4 is larger than R3 (i.e. if the quantity of electrolyte between the third electrode 92(iii) and the central electrode 92(v) is larger than the quantity of electrolyte between the fourth electrode 92(iv) and the central electrode 92(v)) then a fourth potential difference will be detectable between points C and D. The magnitude of the third and fourth potential differences is directly related to the electrolyte imbalance between respective electrodes and the central electrode, and the direction of the potential difference (i.e. whether positive or negative) dictates whether there is an imbalance towards the third electrode or whether there is an imbalance towards the fourth electrode.

It can be seen therefore that by detecting the potential difference between points A and B it is possible to determine whether the sensor is being tilted towards the first electrode or the second electrode, as well as the degree of sensor tilt. It may also be seen that by detecting the potential difference between points C and D it is possible to determine whether the sensor is being tilted towards the third electrode or the fourth electrode, as well as the degree of sensor tilt.

Accordingly, by detecting voltages between points A and B, and C and D respectively it is possible to determine the direction of sensor tilt, and optionally in addition the degree of sensor tilt in the illustrative east-west and north-south directions. This information may be used to control the movement in two dimensions (up/down, left/right) of a pointer on a computer screen. For example, a tilt to the east or the west could be determined to indicate a desire to move the pointer to the right or left, respectively, on the screen. Similarly, a tilt to the north (which would look like a downward tilt) could be determined to indicate a desire to move the pointer downwards on the screen, and a tilt to the south (which would look like an upward tilt) could be determined to indicate a desire to move the pointer upwards on the screen. These sensor motions may be combined so that a downward tilt to the east could be determined to indicate a desire to move the pointer diagonally downwards to the east on the screen.

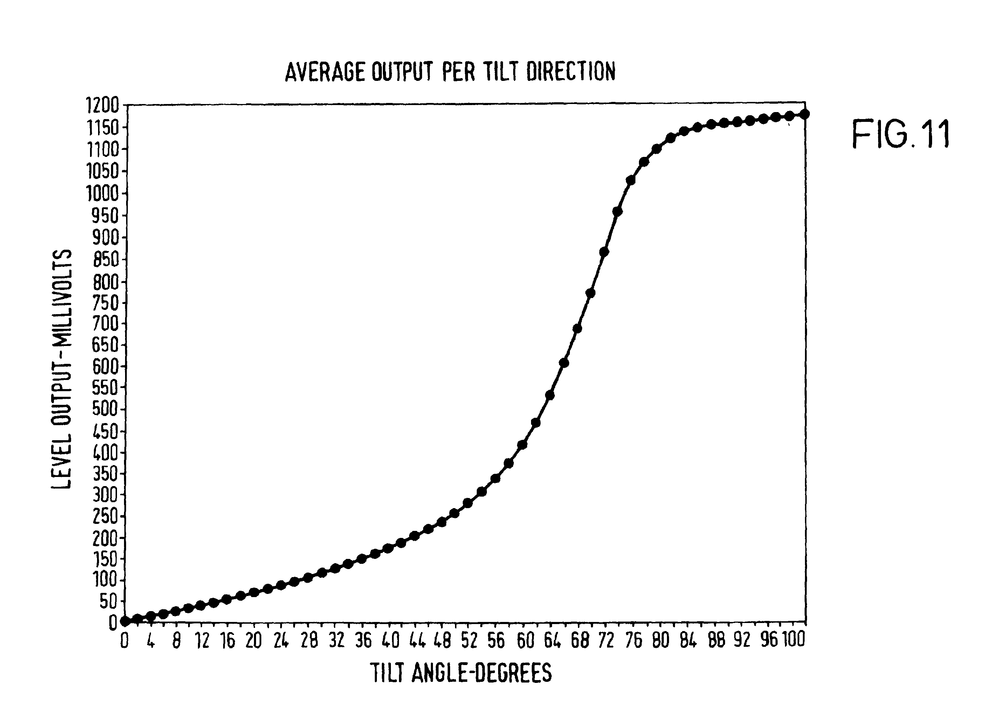

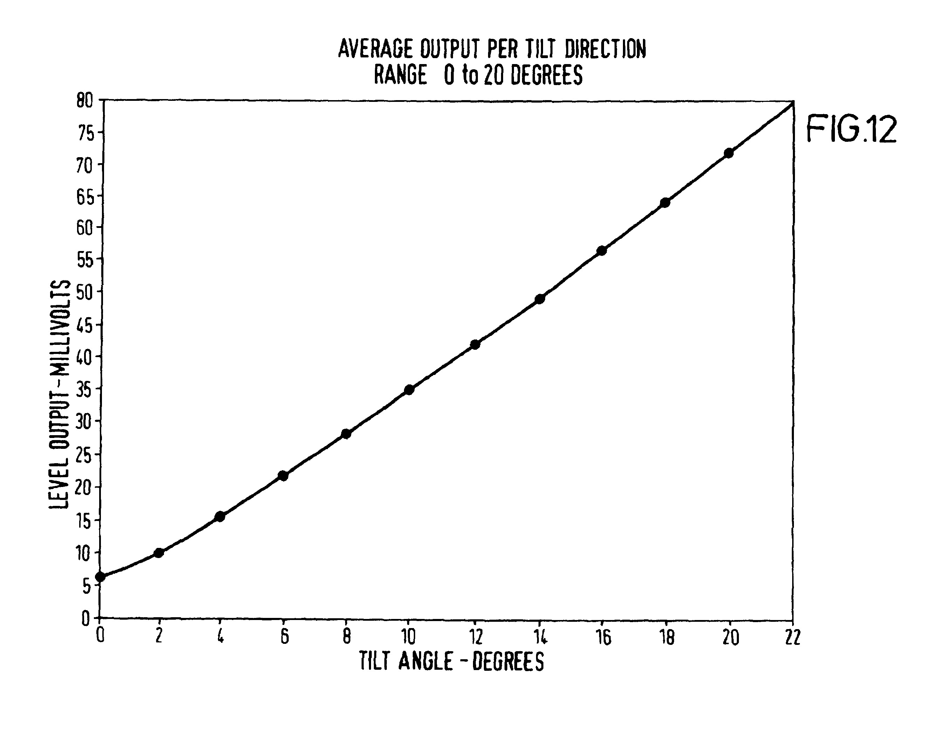

Figure 11 is an illustrative plot of output voltage against tilt angle for a given tilt direction. From Figure 11 it can be seen that as the sensor is tilted further in that given direction, so the output voltage increases as more of the electrode in that given direction comes into contact with the electrolyte. Figure 12 illustrates the relationship between voltage output and the degree of sensor tilt over a selected range of the tilt angles shown in Figure 11.

In the preferred aspect of this embodiment, a first voltage sensor is connected between points A and B, and a second voltage sensor is connected between points C and D. The outputs of the first and second voltage sensors are connected to respective analogue to digital (AD) converters that convert the analogue input voltage levels to a digital signal.

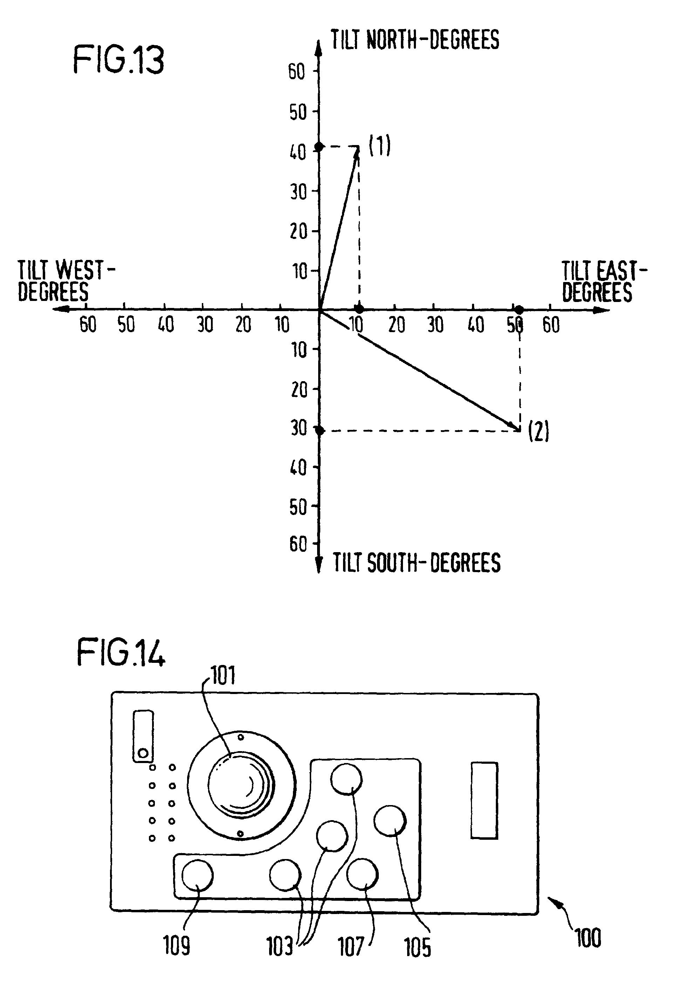

The digital signals are then passed to control logic that determines a movement direction for the pointer on the screen based upon the voltage signals inputted thereto. Figure 13 illustrates graphically the process undertaken in the control logic.

If we imagine that the user of the sensor has tilted his/her head 10° to the east and 40° to the north, then the first tilt sensor (east-west) will output a voltage of 36 mV (from Figure 11) and the second tilt sensor (north-south) will output a voltage of approximately 175 mV (from Figure 12). These voltage signals are passed to the control logic and the control logic determines a direction vector (labelled "1" in Figure 13) that corresponds to a 10° tilt to the east and a 40° tilt to the north. The direction vector indicates the direction in which the pointing device will be moved on the screen of the computer with which the pointing device is connected. To this end, signals indicative of this direction vector are passed from the control logic via the wireless link to the computer, and the computer controls the pointing device in response thereto.

As an another example, if we imagine that the user of the sensor has tilted his/her head 50° to the east and 30° to the south, then the first tilt sensor (east-west) will output a voltage of approximately 250 mV (from Figure 11) and the second tilt sensor (north-south) will output a voltage of approximately -125 mV (from Figure 11). These voltage signals are passed to the control logic and the control logic determines a direction vector (labelled "2" in Figure 13) that corresponds to the detected movement. Signals indicative of this direction vector are passed from the control logic via the wireless link to the computer, and the computer controls the pointing device in response thereto.

In the preferred embodiment, the computer controls the pointer to move at a constant speed across the screen independent of the magnitude of the direction vector generated by the control logic.

In an alternative embodiment, the magnitude of the generated vector may also be transmitted to the computer and the computer may vary the speed of pointer movement in dependence thereupon. Using the above described vectors "1" and "2" as an example, it is apparent that vector "2" has a greater magnitude than vector "1" and thus the computer could control the pointing device to move faster along direction vector "2" than along direction vector "1".

As with the first embodiment, the sensor of the second embodiment includes means for setting a deadzone in which movement of the head of the user does not result in the output of direction signals. The deadzone setting means in this embodiment comprises a computer program embedded in the control logic. The computer program is operable to interrogate the sensor on power-up to determine the initial position of the sensor. This initial position is set as a zero-point from which the sensor will be tilted in use. In the preferred embodiment, a predetermined deadzone is set either side of the zero-point and movement within the deadzone will not cause the pointer to move on the screen. The deadzone could be set as a voltage level, and could for example be ±50mV either side of the set zero-point. For example, if the user of the sensor had a 30° head tilt to the east, then the initial zero-point would correspond to approximately 125mV, and the deadzone would extend from approximately 75mV to 175mV (i.e. from approximately 21° to approximately 42°).

Alternatively, the deadzone could be set as an angle (for example ± 10°) in which case the deadzone for a user with a 30° head tilt to the east would extend from 20° to 40° (i.e. from approximately 72mV to approximately 175mV). The deadzone may be preset (i.e. non-adjustable) or may be adjusted by varying parameters of the computer program.

The deadzone may also be dynamically varied during use to take account of any changes in the user's posture. For example, the computer program could be set up to interrogate the sensor at regular intervals, and to readjust the zero-point to represent whatever position the sensor is in at that time.

As mentioned above in relation to Figure 3, the sensor 5 communicates with the computer 34 via a wireless link, and the sensor is connected to a transmitter that may be housed in a separate unit.

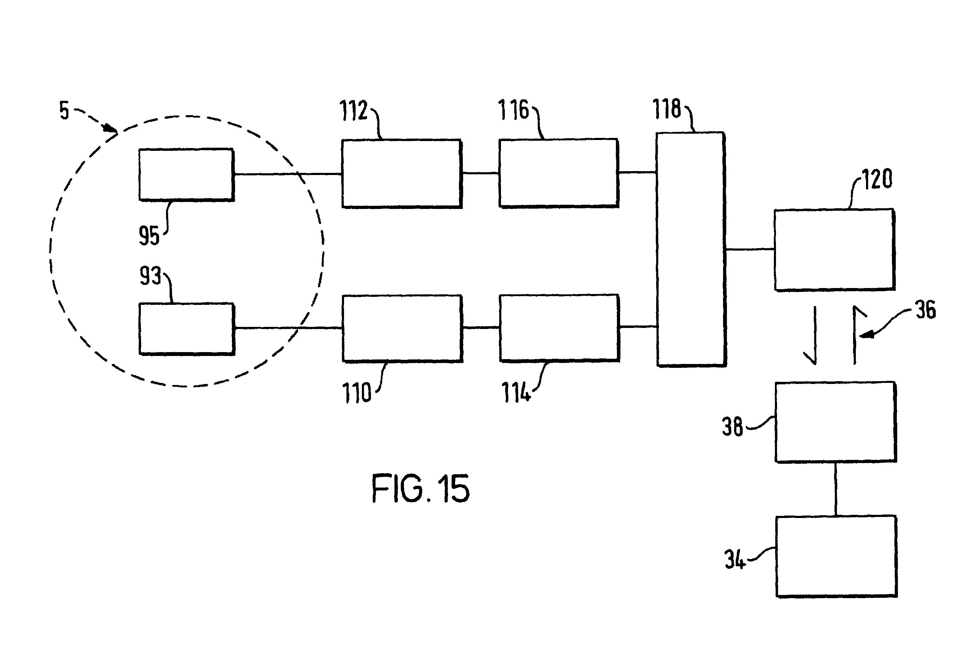

In the second embodiment, it is preferred that the transmitter is housed in a separate unit 100 together with the control logic described above. The preferred construction of the separate unit is shown in Figure 14. As shown, the unit preferably comprises a trackerball 101 (primarily for use by an able-bodied assistant, for example); left, middle and right buttons 103 operable in conjunction with the trackerball 101, a mode switch 105 for switching between the trackerball 101 and the head sensor 5, a speed switch 107 for adjusting the speed of cursor movement between a number of preset levels, and a power on button 109 for switching the unit on. Preferably, the unit is switched off by simultaneously pressing the on and mode buttons. The unit is preferably powered from one or more batteries removably housed therein, and power from those batteries is also preferably passed to the sensor to power the same.

Figure 15 is a schematic illustration of a control mechanism operable to generate control signals for the control of a cursor on a screen.

The mechanism comprises the electrolytic sensor 5, voltage sensors 110 and 112 connected to the first 93 and second 95 tilt sensors, respectively, and AD converters 114 and 116 connected to each of the first and second voltage sensors. The outputs from the AD converters pass to a controller 118 that determines from the inputted signals at least a direction signal indicative of the direction in which the user desires to move the cursor on the screen. At least the direction signal is then passed to a transmitter 120 for transmission accross the wireless link 36 to the receiver 38 that adapts the transmitted signals into cursor signals that are outputted from the receiver, and into the computer 34 via the mouse port.

It will be understood, of course, that the invention has been described above by way of example only and that modifications may be made within the scope of the invention.

For example, whilst the sensor has been described herein with reference to a pointing device, it will be immediately apparent that the sensor may also be employed in other systems. For example, a sensor as described herein could be used to great effect in a gaming machine for sensing tilting of the machine in use. Such a sensor may have any of the features of the pointing device sensor described herein.

In addition, whilst the sensor described in the second embodiment has electrode pairs arranged along perpendicular axes, it will be apparent that the electrode pairs do not have to be arranged perpendicular to one another. They could be arranged at an angle other than 90° to one another. Similarly, the axes do not need to have any particular alignment with the operator. For ease of operation, it is preferred that the north-south axes are aligned with the forward-back motion of the user, but the axes of the electrode pairs could have any desired orientation with respect to the user.

In addition, whilst the second embodiment has been described as having two electrode pairs that are connected by the electrolyte to a common electrode and.or power supply, it will be apparent that this need not be the case. For example, each electrode pair could be connected to a unique electrode and/or power supply.

## Claims

1. A pointing device comprising:
clamp means capable of clamping the device to the head of a user;
means for sensing the direction of movement of the head of the user and for outputting direction signals indicative thereof;
means for mounting the sensing means on the clamp means; and
means for setting a deadzone in which movement of the head of the user does not result in the output of direction signals.

2. A device according to Claim 1, wherein the mounting means comprises a universal mount.

3. A device according to Claim 2, wherein the mounting means comprises a resilient "U" shaped member having a mounting plate and a pair of arms extending therefrom, the arms each having a circular aperture which together define a channel for receiving the sensing means.

4. A device according to Claim 3, comprising a plurality of grommets placed about the periphery of each of the circular apertures, the grommets contacting the sensing means to hold the sensing means in a selected orientation.

5. A device according to any of Claims 1 to 4, wherein the clamp means comprises a band of elastic fabric.

6. A device according to any of Claims 1 to 5, wherein the clamp means comprises a resilient "C" shaped member of plastics material.

7. A device according to any of Claims 1 to 6, comprising means for outputting said direction signals.

8. A device according to Claim 7, wherein the means for outputting direction signals comprises a wireless link having a transmitter and a receiver, the receiver being connectable to a computer.

9. A device according to Claim 8, wherein the wireless link is a radio frequency (RF) link.

10. A device according to Claim 9, wherein the wireless link is an infra-red link.

11. A device according to any of Claims 5 to 10 when dependent upon Claim 1, wherein the sensing means comprises an electrolytic sensor.

12. A device according to Claim 11, wherein the electrolytic sensor comprises a first electrode pair and a second electrode pair, current being passable in use from the electrode pairs to a third electrode via an electrolyte provided about said electrodes.

13. A device according to Claim 12, wherein the first and second electrode pairs each form a wheatstone bridge operable to sense a voltage difference resulting from variations in the amount of electrolyte between respective electrodes of said electrode pairs and said third electrode.

14. A device according to any of Claims 1 to 10, wherein the sensing means comprises at least one compartment and at least one ball provided in the compartment, the ball being movable within the compartment to make or break a light beam between at least one light emitter and at least one light detector provided in opposite walls of the at least one compartment thereby to generate said direction signals.

15. A device according to Claim 14, wherein the sensing means comprises four compartments placed at 90° to one another in the horizontal plane, each compartment having a ball provided therein and a light emitter and a light detector provided in opposite walls of the compartment.

16. A device according to Claim 14, wherein the sensing means comprises a cross shaped compartment and a ball provided therein, the compartment having a central portion and four lobes joined thereto at 90° to one another, each lobe having a light emitter and a light detector provided in opposite walls thereof.

17. A device according to Claim 14, wherein the sensing means comprises a first compartment and a second compartment each having a ball provided therein, the first and second compartments being provided at 90° to one another and comprising a central portion and a pair of linearly aligned lobes each connected to opposite walls of the central portion, each lobe having a light emitter and a light detector provided in opposite walls thereof.

18. A device according to any of Claims 14 to 17, wherein the means for setting a deadzone comprises means for varying the inclination angle of at least a portion of the at least one compartment.

19. A device according to Claim 18, wherein the means for varying the inclination angle comprises a screw adjuster.

20. A device according to Claim 8 or to any of claims 9 to 19 when dependent upon Claim 8, comprising means for converting direction signals to cursor control signals for controlling movement of a cursor on a screen of the computer.

21. A device according to Claim 20 when dependent upon Claim 8 or any of Claims 9, 10 and 14 to 19, wherein the converting means comprises a controller connectable to the sensing means for converting direction signals inputted thereto into cursor control signals, and for outputting cursor control signals to the outputting means.

22. A device according to Claim 21, comprising threshold means connectable to said sensing means for outputting direction signals only when an input has been provided thereto for at least a predetermined quantity of time.

23. A computer system comprising a computer, display means and a device according to any preceding claim for controlling movement of a cursor displayed on said display means.
